# EUROPEAN PATENT APPLICATION

(11) **EP 4 588 952 A1**
(43) Date of publication of application: **23.07.2025**
(21) Application number: 24152284.6
(22) Date of filing: 17.01.2024
(51) Int. Cl.: C08G 59/50, C08L 63/00

(54) **METHOD OF PRODUCING A WIND TURBINE BLADE, A RESPECTIVELY PRODUCED WIND TURBINE BLADE AND A RESIN COMPOSITION SUITABLE FOR USE IN THE PRODUCTION**

(71) Applicant: Siemens Gamesa Renewable Energy A/S, 7330 Brande (DK)
(72) Inventor: Hierro-Olabarria Salgado, Francisco Javier, 01400 Llodio (DK); Stecher, Harald, 9520 Skørping (DK); Jiang, Dai-Hua, 8000 Aarhus C (DK)
(74) Representative: SGRE-Association

(57) **Abstract**

A resin composition suitable for use in the production of a wind turbine blade or a part of any of the foregoing by means of a vacuum infusion method is described. The resin composition comprises an epoxy component, an amine component, and a polyfunctional (meth)acrylate component, wherein at least one of the aforementioned components comprises an acetal and/or a ketal functional group. Moreover, a method of producing a wind turbine blade, a nacelle or a part of any of the foregoing and a respectively produced wind turbine blade, a nacelle or a part of any of the foregoing are described.

## Description

### Field of invention

The present invention relates to the field of wind turbine blades, in particular to a resin composition suitable for use in a method of producing a wind turbine blade or a nacelle by means of a vacuum infusion method, and a method of producing a wind turbine blade, a nacelle or a part of any of the foregoing.

### Art Background

Wind power is considered one of the cleanest, most environmentally friendly energy sources presently available, and wind turbines have gained increased attention for utilizing this energy source. A modern wind turbine typically includes a tower, generator, gearbox, nacelle, and one or more rotor blades. The rotor blades capture kinetic energy of wind and transmit the kinetic energy in the form of rotational energy so as to turn a shaft coupling the rotor blades to a gearbox or directly to the generator. The generator then converts the mechanical energy to electrical energy that may be fed into a power grid.

Various parts of a wind turbine, such as wind turbine blades or nacelles, are typically made of a composite material of (glass) fiber reinforced polymer resin. A conventionally used method for producing such composite material includes vacuum assisted resin transfer molding (VARTM), wherein a liquid or flowable resin is injected in a mold under application of vacuum. To this end, low viscosity resins are generally used which reduce cycle time of manufacture of parts. Moreover, recycling and reprocessing of composites becomes a more and more important topic.

Epoxy amine resins are typically used in industry as the resin starting material. The chemistry thereof is versatile for the application in wind blades and components because the mechanical properties are outstanding and the physical properties can be tuned to fit the vacuum infusion process, which requires low viscosity and long pot life, ideally still combined with fast curing. A drawback of epoxy amine resins is the reaction enthalpy and the way it is released. This can result in very high temperature in thick parts and insulated areas.

Although epoxy amine based resins offer several advantages, there are challenges in the manipulation of cured structures, the post treatment, maintenance and end of life.

For example, if there are geometrical deviations, they must be accepted, defects like dry areas or cracks must be removed and rebuilt with dedicated resins for post treatment. The same is the case for damages during operation. The end of life treatment is also difficult. There are few recycling technologies available, but those are not well suited for recycling of glass reinforced composite structures because the cost of the recycling process cost is exceeding the value of the recovered materials.

Thus, there may be a need for further improvements in epoxy amine based resins for use in the production of composite material of fiber reinforced polymer resin for wind turbine blades or other parts of a wind turbine, in particular in terms of reprocessability and recyclability.

### Summary of the Invention

This need may be met by the subject matter according to the independent claims. Advantageous embodiments of the present invention are described by the dependent claims.

According to an aspect of the invention, there is provided a resin composition (suitable for use in the production of a wind turbine blade, a nacelle or a part thereof by means of a vacuum infusion method) comprising an epoxy component, an amine component, and a polyfunctional (meth)acrylate component (comprising two or more (meth)acrylate functional groups), wherein at least one of the epoxy component, the amine component and the polyfunctional (meth)acrylate component comprises an acetal and/or a ketal functional group.

According to a further aspect of the invention, there is provided a method of producing a wind turbine blade, a nacelle or a part of any of the foregoing, the method comprising applying a resin composition as described herein into a mold by a vacuum infusion method, in particular vacuum assisted resin transfer molding, and curing the resin composition.

According to a further aspect of the invention, there is provided a wind turbine blade, a nacelle or a part of any of the foregoing obtainable (or obtained) by a method as described herein.

These aspects of the invention are in particular based on the finding that a combination of acetals/ketals and (meth)acrylates in epoxy-amine resins introduces new chemical motifs that show an interesting synergistic effect. Both acetals as well as beta-amino esters (resulting from an aza-Michael addition reaction between an amine and an acrylate) offer dynamic properties, but the combination of the two allows either the use of very low levels of acrylates for good weldability or the reduction of acetal/ketal groups in the network. The recyclability under acidic conditions is enhanced as well. This can be exploited by shorter process times or the application of lower reactive acetals/ketals in the hardener.

The present inventors in particular investigated a resin composition that contained a ketal moiety in the hardener backbone - the hardener was based on Recyclamine technology, which uses an acetal or ketal moiety in the backbone to introduce recyclability.

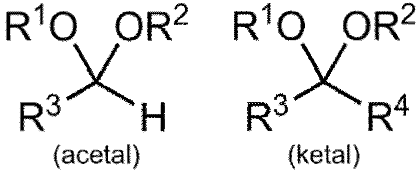

In addition, a portion of the epoxy part of an epoxy-amine resin has been replaced by an acrylate which may react with an amine to yield a beta-amino ester by aza-Michael addition and which in turn exhibits a dissociative dynamic mechanism via a retro-aza-Michael reaction as shown in the following exemplary reaction scheme: 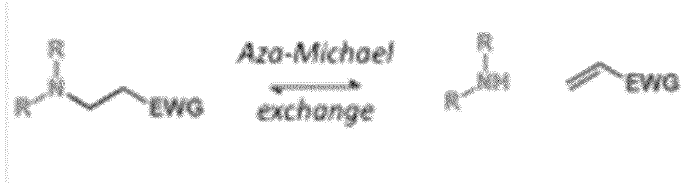 wherein EWG represents an electron-withdrawing group and R stands for an arbitrary residue.

Both technologies on their own are known to offer dynamic behavior, but the requirements for application as infusion resin for blades limits the effect very much. The high crosslink density for acetals on the one hand and the limitation of acrylate content to low levels to keep the mechanical properties and avoid too fast viscosity increase because of the much higher reactivity of acrylates compared to epoxy groups on the other hand limit the achievable dynamic properties.

Besides the retro-aza Michael reaction the ester group of the acrylic component as well as the acetal can both participate in exchange reactions via hydroxy groups, which are present in high number in the network from ring opening reaction of the epoxy groups.

It was surprisingly found that there is a synergistic effect of combining the two technologies. Whereas a formulation containing 20 % acrylates in the resin part together with conventional amine hardeners gives limited reprocessability, already 15 % of acrylate in a ketal containing (Recyclamine by Aditya Birla Chemicals) hardener based resin system has been proven to show good weldability and reshapeability. This gives much more freedom in formulation of infusion resins and balancing mechanical, physical and reactivity properties. The acetal or ketal moiety can be in the epoxy part, the acrylate part or amine part.

On top of the above mentioned advantages the new type of resin showed excellent adhesion to a variety of substrates including conventional epoxy amine resin.

### Detailed Description

Hereinafter, details of the present invention and other features and advantages thereof will be described. However, the present invention is not limited to the following specific descriptions, but they are rather for illustrative purposes only.

It should be noted that features described in connection with one exemplary embodiment or exemplary aspect may be combined with any other exemplary embodiment or exemplary aspect, in particular features described with any exemplary embodiment of a resin composition may be combined with any other exemplary embodiment of a resin composition and with any exemplary embodiment of a method of producing a wind turbine blade, a nacelle or a part of any of the foregoing and with any exemplary embodiment of a wind turbine blade, a nacelle or a part of any of the foregoing and vice versa, unless specifically stated otherwise.

Where an indefinite or definite article is used when referring to a singular term, such as "a", "an" or "the", a plural of that term is also included and vice versa, unless specifically stated otherwise.

The expression "comprising", as used herein, includes not only the meaning of "comprising", "including" or "containing", but may also encompass "consisting essentially of" and "consisting of".

Unless specifically stated otherwise, the expression "at least partially", "at least a partial" or "at least (a) part of", as used herein, may mean at least 5 % thereof, in particular at least 10 % thereof, in particular at least 15 % thereof, in particular at least 20 % thereof, in particular at least 25 % thereof, in particular at least 30 % thereof, in particular at least 35 % thereof, in particular at least 40 % thereof, in particular at least 45 % thereof, in particular at least 50 % thereof, in particular at least 55 % thereof, in particular at least 60 % thereof, in particular at least 65 % thereof, in particular at least 70 % thereof, in particular at least 75 % thereof, in particular at least 80 % thereof, in particular at least 85 % thereof, in particular at least 90 % thereof, in particular at least 95 % thereof, in particular at least 98 % thereof, and may also mean 100 % thereof.

In a first aspect, a resin composition is provided. The resin composition may in particular be suitable for use in a vacuum infusion method and may therefore also be referred to as an infusion resin. Moreover, the resin composition may in particular be suitable for use in the production of a wind turbine blade, a nacelle or a part of any of the foregoing or any other part of a wind turbine comprising a composite material of (glass) fiber reinforced polymer resin.

The term "composition", as used herein, may in particular mean that the components (ingredients) of the composition are in close proximity with each other and/or that the components are (intensely) mixed with each other, for instance by using a mixer, a stirrer and/or by shaking, to thereby form the composition. In particular, the components of the compositions may be uniformly distributed or dispersed throughout within the composition. The composition may be in particular semi-solid (pasty) or liquid, in particular a liquid solution or a semi-solid or liquid suspension.

The term "resin composition", as used herein, may in particular mean that the composition comprises or (substantially) consists of resins or resin components which may undergo a chemical reaction (e.g. polymerization or crosslinking reaction) with some of each other, thereby curing or hardening, typically induced by thermal energy (e.g. heating) or irradiation with electromagnetic radiation.

The resin composition comprises an epoxy component, an amine component and a polyfunctional (meth)acrylate component. At least one of the epoxy component, the amine component and the polyfunctional (meth)acrylate component comprises an acetal and/or a ketal functional group. In other words, the epoxy component (at least a part thereof), the amine component (at least a part thereof) and/or the polyfunctional (meth)acrylate component (at least a part thereof) comprise an acetal and/or a ketal functional group. Thus, any one of the foregoing components, any combination of two of the foregoing components or all three of the foregoing components may comprise an acetal and/or a ketal functional group. It is also possible that one of the foregoing components comprises an acetal functional group and another one of the foregoing components comprises a ketal functional group or even that one of the foregoing components comprises an acetal functional group and a ketal functional group in the same molecule.

An acetal functional group and a ketal functional group are generally represented by the following chemical formulas: 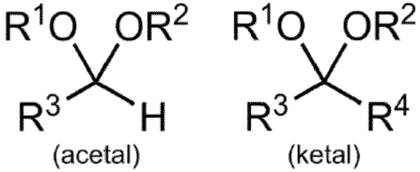 wherein R¹, R², R³ and R⁴ independently from each other represent an organic (carbon atom-containing) moiety. As it is known to a person skilled in the art, an acetal or a ketal can be cleaved by hydrolysis under acidic conditions to yield two alcohols (R⁴-OH and R²-OH in the above general formulas) and an aldehyde (R³-CHO in the above general formula of an acetal) or a ketone (R³-C(=O)-R⁴ in the above general formula of a ketal).

The resin composition comprises an epoxy component. The epoxy component is not particularly limited and any suitable example thereof customary in the field of epoxy-amine infusion resins may be used. The epoxy component is in particular characterized in that it comprises one or more epoxide functional groups.

In an embodiment, at least part (or all) of the epoxy components comprises an acetal and/or a ketal functional group. In particular, it may be sufficient if 25 to 50 % of the epoxy components comprises an acetal and/or a ketal functional group.

In an embodiment, the epoxy component is selected from the group consisting of glycidyl ethers, glycidyl esters, glycidyl amines, divinylbenzene dioxide, cycloaliphatic epoxides, and combinations thereof.

The resin composition also comprises an amine component. The amine component is not particularly limited and any suitable example thereof customary in the field of epoxy-amine infusion resins may be used. The amine component is in particular characterized in that it comprises one or more amine functional groups.

In an embodiment, at least part (or all) of the amine components comprises an acetal and/or a ketal functional group. In particular, it may be advantageous if 50 to 100 % of the amine components comprises an acetal and/or a ketal functional group.

In an embodiment, the amine component is selected from the group consisting of aliphatic polyamines, arylaliphatic polyamines, cycloaliphatic polyamines, alkanolamines, polyetherpolyamines, and combinations thereof.

The resin composition also comprises a polyfunctional (meth)acrylate component. The polyfunctional (meth)acrylate component is in particular characterized in that it comprises two or more (meth)acrylate functional groups. A polyfunctional acrylate component, i.e. comprising two or more acrylate functional groups, is preferred, but a polyfunctional methacrylate component, i.e. comprising two or more methacrylate functional groups, may also be used. It may also be possible to use a mixed polyfunctional (meth)acrylate component comprising one or more acrylate functional groups and one or more methacrylate functional groups.

A "(meth)acrylate" encompasses an acrylate and/or a methacrylate. The terms "acrylate" and "methacrylate" as used herein, correspond to the generally accepted meanings thereof. An acrylate may be represented by the general formula "H₂C=CH-C(=O)-" and a methacrylate may be represented by the general formula "H₂C=C(CH₃)-C(=O)-". An acrylate may also encompass an itaconate.

In an embodiment, the polyfunctional (meth)acrylate component comprises two, three, four or more (meth)acrylate functional groups.

In an embodiment, at least part (or all) of the polyfunctional (meth)acrylate components comprises an acetal and/or a ketal functional group. In particular, it may be sufficient if 50 to 100 % of the polyfunctional (meth)acrylate components comprises an acetal and/or a ketal functional group.

In an embodiment, the polyfunctional (meth)acrylate component is selected from the group consisting of hexanediol diacrylate, butanediol diacrylate, dipropylene glycol diacrylate, diethylene glycol diacrylate, neopentyldiol diacrylate, diacrylated Bisphenol A diglycidylyether, trimethylolpropane triacrylate and combinations thereof.

In an embodiment, a molar ratio of the polyfunctional (meth)acrylate component is in a range of from 10 to 50 mol% and a molar ratio of the epoxy component is in a range of from 50 to 90 mol%, each per 100 mol% of the amine component. In other words, per 100 mol% of the amine component, the resin composition may comprise 50 to 90 mol% of the epoxy component and 10 to 50 mol% of the polyfunctional (meth)acrylate component. The sum of the epoxy component and the polyfunctional (meth)acrylate component may in particular amount to 100 mol%. It might also be possible that the amine component is contained in excess compared to the sum of the epoxy component and the polyfunctional(meth)acrylate component. For instance the composition may also comprise 100 to 200 mol% of the amine component, 50 to 90 mol% of the epoxy component and 10 to 50 mol% of the polyfunctional (meth)acrylate component. However, an excess of the amine component compared to the sum of the epoxy component and the polyfunctional(meth)acrylate component is advantageously not required.

In an embodiment, a molar ratio of the polyfunctional (meth)acrylate component to the epoxy component is in a range of from 1:8 to 1:2, in particular in a range of from 1:5 to 1:2.

The resin composition according to the first aspect may be advantageously used in a method according to the second aspect as described below.

In a second aspect, a method of producing a wind turbine blade, a nacelle or a part of any of the foregoing is provided.

In the method, a resin composition as described herein is applied, in particular injected, into a mold by a vacuum infusion method. In the context of the present specification, the term "vacuum infusion method" may in particular denote a molding technique wherein a liquid or flowable resin is injected in a mold under application of vacuum. In particular, vacuum assisted resin transfer molding (VARTM) may be used. The infusion resin may in particular be a liquid or flowable composition comprising components, typically at least two different types of components, that may react with each other to thereby form a cured or hardened product.

The mold, into which the resin composition is applied, typically forms a cavity and may therefore also be designated as mold cavity. The mold may be adapted to an outline of the turbine blade, the nacelle or a part of any of the foregoing to be produced.

In an embodiment, the step of curing the resin composition comprises heating the resin composition to a temperature in the range of from 60 to 150 °C, in particular 70 to 120 °C.

In an embodiment, the method further comprises, after curing the resin composition, removing the mold to thereby obtain the produced wind turbine blade, nacelle or the part thereof.

In a further aspect, a wind turbine blade, a nacelle or a part of any of the foregoing is obtainable or is obtained by a method as described in the foregoing.

While the present invention has been described in detail by way of specific embodiments and examples, it should be appreciated the invention is not limited thereto and various alterations and modifications are possible, without departing from the scope of the invention.

## Claims

1. A resin composition comprising:
an epoxy component;
an amine component;
a polyfunctional (meth)acrylate component,
wherein at least one of the epoxy component, the amine component and the polyfunctional (meth)acrylate component comprises an acetal and/or a ketal functional group.

2. The resin composition as set forth in claim 1, wherein at least part of the epoxy components comprises an acetal and/or a ketal functional group, in particular wherein 25 to 50 % of the epoxy components comprise an acetal and/or a ketal functional group.

3. The resin composition as set forth in any one of the preceding claims, wherein the epoxy component is selected from the group consisting of glycidyl ethers, glycidyl esters, glycidyl amines, divinylbenzene dioxide, cycloaliphatic epoxides, and combinations thereof.

4. The resin composition as set forth in any one of the preceding claims, wherein at least part of the amine components comprises an acetal and/or a ketal functional group, in particular wherein 50 to 100 % of the amine components comprise an acetal and/or a ketal functional group.

5. The resin composition as set forth in any one of the preceding claims, wherein the amine component is selected from the group consisting of aliphatic polyamines, arylaliphatic polyamines, cycloaliphatic polyamines, alkanolamines, polyetherpolyamines, and combinations thereof.

6. The resin composition as set forth in any one of the preceding claims, wherein at least part of the polyfunctional (meth)acrylate components comprises an acetal and/or a ketal functional group, in particular wherein 50 to 100 % of the polyfunctional (meth)acrylate components comprise an acetal and/or a ketal functional group.

7. The resin composition as set forth in any one of the preceding claims, wherein the polyfunctional (meth)acrylate component comprises two, three, four or more (meth)acrylate functional groups.

8. The resin composition as set forth in any one of the preceding claims, wherein the polyfunctional (meth)acrylate component is selected from the group consisting of hexanediol diacrylate, butanediol diacrylate, dipropylene glycol diacrylate, diethylene glycol diacrylate, neopentyldiol diacrylate, diacrylated Bisphenol Adiglycidylether, trimethylolpropane triacrylate and combinations thereof.

9. The resin composition as set forth in any one of the preceding claims, wherein a molar ratio of the polyfunctional (meth)acrylate component is in a range of from 10 to 50 mol% and a molar ratio of the epoxy component is in a range of from 50 to 90 mol%, each per 100 mol% of the amine component.

10. A method of producing a wind turbine blade, a nacelle or a part of any of the foregoing, the method comprising:
applying a resin composition according to any of the preceding claims into a mold by a vacuum infusion method, in particular vacuum assisted resin transfer molding,
curing the resin composition.

11. The method as set forth in claim 10, wherein the step of curing the resin composition comprises heating the resin composition to a temperature in the range of from 60 to 150 °C, in particular 70 to 120 °C.

12. The method as set forth in any one of claims 10 to 11, wherein the method further comprises, after curing the resin composition, removing the mold.

13. A wind turbine blade, a nacelle or a part of any of the foregoing obtainable by a method according to any one of claims 10 to 12.
